# EUROPÄISCHE PATENTANMELDUNG

(11) **EP 4 850 875 A1**
(43) Veröffentlichungstag der Anmeldung: **09.12.2026**
(21) Anmeldenummer: 26182645.7
(22) Anmeldetag: 02.06.2026
(51) Int. Cl.: B25J 19/00

(54) **INDUSTRIEROBOTER ZUR HANDHABUNG VON STÜCKGÜTERN, VERFAHREN ZUR HANDHABUNG VON STÜCKGÜTERN UND SYSTEM MIT EINEM INDUSTRIEROBOTER ZUR HANDHABUNG VON STÜCKGÜTERN**

(30) Priorität: 05.06.2025 DE 102025122107
(71) Anmelder: Krones AG, 93073 Neutraubling (DE)
(72) Erfinder: PERL, Kurt, 93073 Neutraubling (DE); MARTL, Andreas, 93073 Neutraubling (DE); KIRSCHNER, Peter, 93073 Neutraubling (DE); REICHERT, Christian, 93073 Neutraubling (DE); SCRAVAGLIERI, Jean Giuseppe, 93073 Neutraubling (DE); STOCKER, Tim, 77731 Willstätt (DE); HAAS, Guillaume, 77731 Willstätt (DE)
(74) Vertreter: Grünecker Patent- und Rechtsanwälte PartG mbB

(57) **Zusammenfassung**

Es wird ein Industrieroboter (1, 80, 90) zur Handhabung von Stückgütern mit einer seriellen Kinematik vorgeschlagen, welche für eine große Traglast der Stückgüter ausgebildet ist. Der Industrieroboter (1, 80, 90) ist ausgestattet mit einem an einer Roboterbasis (2) drehbar aufgenommenen Karussell (3), mit einer an dem Karussell (3) drehbar aufgenommenen Schwinge (6), mit einem an der Schwinge (6) drehbar aufgenommenen Armausleger (10), mit einem an dem Armausleger (10) beweglich angeordneten Endeffektorträger (30), welcher einen die Stückgüter handhabenden Endeffektor aufnimmt, und mit einer Gewichtsausgleichseinrichtung, welche die auf die Kinematik durch eine Traglast wirkenden Kräfte zumindest teilweise kompensiert, wobei die Gewichtsausgleichseinrichtung mindestens einen Zylinder (39) mit einem hydraulisch und/ oder pneumatisch betriebenen Kolben umfasst. Eine Steuereinrichtung, welche die Gewichtsausgleichseinrichtung steuert, stellt die durch die Gewichtsausgleichseinrichtung kompensierte Kraft in Abhängigkeit von der Gewichtskraft der am Endeffektor angeordneten Traglast ein. Es werden ferner ein System mit einem derartigen Industrieroboter und ein Verfahren zur Handhabung von Stückgütern mit einem derartigen Industrieroboter vorgeschlagen.

## Beschreibung

Die Erfindung geht aus von einem Industrieroboter mit einer seriellen Kinematik zur Handhabung von Stückgütern, einem System mit einem derartigen Industrieroboter sowie von einem Verfahren zur Handhabung von Stückgütern mit einem derartigen Industrieroboter.

Derartige Industrieroboter dienen zum Positionieren und Bewegen eines Manipulators oder Endeffektors in mindestens zwei Dimensionen im Raum. Die Kinematik umfasst eine Roboterbasis, welche auch als Grundgestell bezeichnet wird, ein Karussell, eine Schwinge und einen Armausleger, an welchem eine Effektorhalterung zur Aufnahme des Endeffektors aufgenommen ist. Der Endeffektor bildet das letzte Element der kinematischen Kette, welche das Karussell, die Schwinge und den Armausleger umfasst. Der Endeffektor wird auch als Manipulator bezeichnet, der die physikalische Interaktion mit der Umgebung des Industrieroboters ausführt. Als Endeffektor oder Manipulator wird beispielsweise ein Greifer oder ein Werkzeug eingesetzt, welche die Stückgüter insbesondere aufnehmen und umsetzen. Die Bewegung der Effektorhalterung relativ zu der Roboterbasis erfolgt mittels der Kinematik. Hierzu sind mehrere Antriebe vorgesehen: ein erster Antrieb, der das Karussell um eine erste geometrische Antriebsachse relativ zu der Roboterbasis dreht, ein zweiter Antrieb, der die Schwinge um eine zweite geometrische Antriebsachse relativ zu dem Karussell dreht, ein dritter Antrieb, der den Armausleger um eine dritte geometrische Antriebsachse relativ zu der Schwinge dreht. Die drei Achsen, welche für eine Bewegung des Karussells, der Schwinge und des Armauslegers sorgen, werden auch als Hauptachsen bezeichnet. Weitere Antriebe dienen dazu, die an dem Armausleger aufgenommene Effektorhalterung und den an der Effektorhalterung aufgenommenen Endeffektor um weitere geometrische Achsen zu bewegen. Die zugehörigen Achsen werden in Unterscheidung zu den Hauptachsen als Handachsen bezeichnet. Die Positionierung der Effektorhalterung mit einem daran angeordneten Endeffektor im Raum erfolgt mittels des Karussells, der Schwinge und des Armauslegers und den zugehörigen Hauptachsen. Eine Bewegung der Effektorhalterung relativ zu dem Armausleger sowie eine Bewegung des Endeffektors oder Teile des Endeffektors relativ zur Effektorhalterung erfolgt mittels mindestens einer Handachse. Hierzu zählt beispielsweise eine Drehung der Effektorhalterung oder das Öffnen und Schließen eines als Greifer ausgebildeten Endeffektors. Da die Hauptachsen eine erste Achse, eine zweite Achse und eine dritte Achse umfassen, werden die Handachsen auch als vierte, fünfte und sechste Achse bezeichnet.

Industrieroboter mit serieller Kinematik werden auch als Knickarmroboter bezeichnet.

Industrieroboter, welche für eine hohe Traglast ausgelegt sind, werden beispielsweise zur Handhabung von Stückgütern mit großem Eigengewicht eingesetzt. Hierzu zählen zum Beispiel Verpackungs- oder Palettieranlagen zum Stapeln und Palettieren von Objekten wie Paketen oder Gebinden mit mehreren Artikeln. Je nach Anwendung kann die Traglast beispielsweise mehr als 100kg, mehr als 200kg oder sogar mehr als 800kg betragen. Kinematiken, die für eine entsprechend hohe Traglast ausgelegt sind, müssen eine hohe Stabilität aufweisen, was wiederum ein gewisses Eigengewicht zur Folge hat. Eine durch den Endeffektor aufgenommene Traglast übt aufgrund ihrer Gewichtskraft eine Kraft und ein Drehmoment auf die Kinematik aus. Kraft und Drehmoment hängen von der Gewichtskraft der Traglast ab. Um dem Drehmoment und den Kräften entgegenzuwirken, kann die Kinematik mit einer mechanischen Feder ausgestattet sein. Diese Feder erzeugt bei ihrer Auslenkung eine Gegenkraft, die der Kraft der Traglast entgegenwirkt. Als nachteilig erweist sich jedoch, dass für unterschiedlich große Traglasten verschiedene Federn an der Kinematik angeordnet werden müssen. Eine flexible Anpassung der Kinematik an die Gewichtskraft einer durch den Industrieroboter aufgenommene Traglast ist auf diese Weise nicht möglich.

Der Erfindung liegt die Aufgabe zugrunde, einen Industrieroboter, ein System und ein Verfahren zur Handhabung von Stückgütern mit großen Traglasten zur Verfügung zu stellen, welche die Erzeugung einer Gegenkraft zu der Gewichtskraft einer an dem Industrieroboter angeordneten Traglast ermöglichen, wobei die Gegenkraft flexibel an die Traglast angepasst ist, ohne dass hierzu eine Umrüstung des Industrieroboters notwendig ist.

Diese Aufgabe wird durch den Industrieroboter mit den Merkmalen des Anspruchs 1 gelöst. Der Industrieroboter zeichnet sich dadurch aus, dass er mit einer Gewichtsausgleichseinrichtung ausgestattet ist, welche die auf die Kinematik durch eine Traglast wirkenden Kräfte zumindest teilweise kompensiert, wobei die Gewichtsausgleichseinrichtung mindestens einen Zylinder mit einem hydraulisch und/ oder pneumatisch betriebenen Kolben umfasst. An dem Kolben ist eine Kolbenstange angeordnet. Der Zylinder und die Kolbenstange sind mit der Kinematik verbunden. Eine Bewegung der Schwinge und/ oder des Armauslegers führt zu einer Auslenkung des in dem Zylinder verschiebbar aufgenommene Kolben aus einer Ausgangstellung. Der Zylinder ist mit einem flüssigen oder gasförmigen Medium, beispielsweise einer Hydraulikflüssigkeit oder einem Gas zumindest teilweise gefüllt. Die Bewegung des Kolbens in dem Zylinder wird durch dieses Medium beeinflusst. Bei der Auslenkung des Kolbens aus einer Ausgangslage wird eine Kraft erzeugt, die auf die Kinematik wirkt und die der Gewichtskraft einer an dem Industrieroboter angeordneten Traglast entgegengerichtet ist. Diese Gegenkraft sorgt für eine Kompensation der Gewichtskraft der Traglast. Der Industrieroboter ist mit einer Steuereinrichtung, ausgestattet, welche die Gewichtsausgleichseinrichtung steuert, indem sie die durch die Gewichtsausgleichseinrichtung kompensierte Kraft in Abhängigkeit von der Gewichtskraft der am Endeffektor angeordneten Traglast einstellt. Dies erfolgt bevorzugt dadurch, dass das Volumen des Mediums, welches bei einer Bewegung des Kolbens in den Zylinder einströmt und/ oder aus dem Zylinder ausströmt, in Abhängigkeit von der Gewichtskraft der Traglast vorgegeben wird. Die Gewichtsausgleichseinrichtung ist hierzu bevorzugt mit einem Reservoir für das Medium ausgestattet. Aus diesem Reservoir wird das jeweils benötigte Volumen des Mediums zu Verfügung gestellt. Diese Einstellung erfolgt automatisch, ohne dass hierzu ein Umrüsten des Industrieroboters notwendig ist. Auf diese Weise wird die Anpassung der durch die Gewichtsausgleicheinrichtung erzeugten Gegenkraft an die Gewichtskraft einer Traglast erreicht.

Die Gewichtsausgleichseinrichtung ermöglicht darüber hinaus eine Anpassung der Gegenkraft in Abhängigkeit davon, ob eine Bewegung der Kinematik mit oder ohne eine Traglast erfolgt. Dies ist insbesondere dann von Bedeutung, wenn der Industrieroboter mit einem Greifer ausgestattet ist, der an einer ersten Position eine Traglast aufnimmt, diese an eine vorgegebene zweite Position bewegt und dort absetzt, um anschließend ohne Traglast an die erste Position zurückzukehren oder an eine dritte Position bewegt zu werden. Während für die Bewegung des Industrieroboters mit Traglast eine Anpassung der Gegenkraft an die Gewichtskraft der Traglast erfolgt, ist für die Bewegung des Industrieroboters ohne Traglast keine Gegenkraft notwendig oder allenfalls eine Gegenkraft, die von der Ausrichtung der Schwinge und des Armauslegers abhängig ist und damit Kräfte kompensiert, die durch die Kinematik selbst erzeugt werden.

Nach einer vorteilhaften Ausgestaltung der Erfindung ist die durch die Gewichtsausgleichseinrichtung erzeugte Kraft, welche auch als Gegenkraft bezeichnet wird, stufenlos einstellbar.

Nach einer weiteren vorteilhaften Ausgestaltung der Erfindung ist die Gewichtsausgleichseinrichtung der Schwinge und der zweiten geometrischen Antriebsachse zugeordnet. Zylinder und Kolben sind hierzu derart mit der Kinematik verbunden, dass eine Bewegung der Schwinge um die zweite geometrische Achse zu einer Auslenkung des Kolbens in dem Zylinder führt. Dabei wird eine auf die Schwinge durch die Traglast wirkende Kraft durch eine Gegenkraft ganz oder teilweise kompensiert.

Nach einer weiteren vorteilhaften Ausgestaltung der Erfindung ist die Gewichtsausgleichseinrichtung an dem Karussell beweglich aufgenommen und mit der Schwinge verbunden.

Nach einer weiteren vorteilhaften Ausgestaltung der Erfindung ist die Gewichtsausgleichseinrichtung dem Armausleger und der dritten geometrischen Antriebsachse zugeordnet. Zylinder und Kolben sind hierzu derart mit der Kinematik verbunden, dass eine Bewegung des Armauslegers relativ zu der Schwinge um die dritte geometrische Achse zu einer Auslenkung des Kolbens in dem Zylinder führt. Dabei wird eine auf den Armausleger durch die Traglast wirkende Kraft durch eine Gegenkraft ganz oder teilweise kompensiert.

Nach einer weiteren vorteilhaften Ausgestaltung der Erfindung ist die Gewichtsausgleichseinrichtung an dem Karussell beweglich aufgenommen und mit dem Armausleger zumindest mittelbar verbunden.

Nach einer weiteren vorteilhaften Ausgestaltung der Erfindung ist der dritte Antrieb, welcher den Armausleger um die dritte geometrische Antriebsachse relativ zu der Schwinge rotiert, an dem Karussell angeordnet. Die Kinematik ist mit einer Treibstange ausgestattet, welche das Drehmoment des dritten Antriebs auf den Armausleger überträgt. Die Treibstange ist mit einem Hebel verbunden, an dem ein Gegengewicht angeordnet ist. Bei einer Bewegung des Armauslegers wird das Gegengewicht ausgelenkt. Durch die Gewichtskraft des Gegengewichts wird eine Kraft erzeugt, die als Gegenkraft einer an dem Armausleger angeordneten Traglast entgegengerichtet ist. Die Gewichtsausgleichseinrichtung wird damit durch dieses Gegengewicht unterstützt.

Nach einer weiteren vorteilhaften Ausgestaltung der Erfindung ist der Hebel an der Treibstange in die dem Armausleger entgegengesetzte Richtung ausgerichtet.

Nach einer weiteren vorteilhaften Ausgestaltung der Erfindung ist das Gegengewicht aus mehreren physischen Gewichten in Scheibenform zusammengesetzt. Die durch das Gegengewicht erzeugte Gegenkraft kann durch die Anzahl der Gewichte eingestellt werden, die an der Kinematik angeordnet sind.

Nach einer weiteren vorteilhaften Ausgestaltung der Erfindung weist das Gegengewicht zwei Stapel mit scheibenförmigen Gewichten auf, wobei die zwei Stapel symmetrisch zur Treibstange an dem Hebel aufgenommen sind.

Nach einer weiteren vorteilhaften Ausgestaltung der Erfindung weist die Gewichtsausgleichseinrichtung mindestens einen Druckspeicher auf, der mit dem Zylinder in Wirkverbindung steht. Der Druckspeicher bildet dabei ein Reservoir für das Medium, das in den Zylinder zur Einstellung einer der Gewichtskraft der Traglast entgegengerichteten Gegenkraft ein- und ausströmt. Diese Gegenkraft sorgt für eine Kompensation der Gewichtskraft der Traglast. Aus dem Druckspeicher wird jeweils dasjenige Volumen des Mediums zur Verfügung gestellt, das zur Erzeugung einer Gegenkraft zur Gewichtskraft der Traglast für eine Kompensation der Traglast benötigt wird.

Nach einer weiteren vorteilhaften Ausgestaltung der Erfindung weist die Gewichtsausgleichseinrichtung mehrere Druckspeicher auf. Die Steuereinrichtung regelt die Anzahl der mit dem Zylinder aktiv wirkverbundenen Druckspeicher und die Anzahl der mit dem Zylinder passiv wirkverbundenen Druckspeicher. Ist ein Druckspeicher aktiv mit dem Zylinder wirkverbunden, bildet der Druckspeicher ein Reservoir für das Medium in dem Zylinder. In diesem Fall findet ein Austausch zwischen dem Medium in dem Druckspeicher und dem Medium in dem Zylinder statt. Ist der Druckspeicher passiv mit dem Zylinder verbunden, ist die Leitung des Mediums von dem Druckspeicher in den Zylinder und umgekehrt temporär unterbunden. Hierzu kann zwischen den Druckspeichern und dem Ventil ein Absperrorgan, beispielsweise ein Ventil vorgesehen sein.

Nach einer weiteren vorteilhaften Ausgestaltung der Erfindung ist die Gewichtsausgleichseinrichtung mit mindestens einem Proportionalventil ausgestattet, über welches die Steuereinrichtung das Volumen einer Hydraulikflüssigkeit für die Betätigung des Kolbens steuert.

Nach einer weiteren vorteilhaften Ausgestaltung der Erfindung ist der Zylinder über ein erstes Lager drehbar mit dem Karussell verbunden.

Nach einer weiteren vorteilhaften Ausgestaltung der Erfindung ist das erste Lager abseits der kürzesten geometrischen Verbindung zwischen der zweiten geometrischen Antriebsachse und der dritten geometrischen Antriebsachse angeordnet. Dies gilt zumindest, wenn sich die Schwinge derart ausgerichtet ist, dass die zweite geometrische Achse und die dritte geometrische Achse eine vertikal ausgerichtete Ebene aufspannen. Das erste Lager befindet sich dann auf der dem Endeffektorträger abgewandten Seite dieser vertikal ausgerichteten Ebene. Dieser Versatz sorgt für eine Entlastung des zweiten Antriebs, insbesondere wenn die Schwinge im wesentlichen vertikal ausgerichtet ist oder gegenüber dieser vertikalen Ausrichtung um einen kleinen Winkel ausgelenkt ist.

Nach einer weiteren vorteilhaften Ausgestaltung der Erfindung ist der Kolben mit einer Kolbenstange ausgestattet, die an ihrem dem Kolben abgewandten Ende über ein zweites Lager zumindest mittelbar drehbar mit der Schwinge verbunden ist.

Die Erfindung bezieht sich zusätzlich auf ein System zur Handhabung von Stückgütern, insbesondere Behältern, wobei das System mindestens einen Industrieroboter umfasst, wie er bereits beschrieben wurde. Das System kann weiterhin eine oder mehrere der folgenden Behälterbehandlungsmaschinen umfassen: eine Abfüllmaschine, eine Etikettiermaschine, einen Packer und/oder einen Schrumpftunnel. Weiterhin kann das System Transporteinrichtungen zum Transport der Stückgüter umfassen, welche Behälter bzw. zu Gebinden zusammengefasste Behälter transportiert. Bei den Behältern handelt es sich vorzugsweise um Dosen oder Flaschen. Bei den Gebinden kann es sich um Schrumpfgebinde, Klebegebinde (bei denen mindestens zwei Behälter unmittelbar und insbesondere ausschließlich, durch Klebepunkte miteinander verbunden sind), Trays, Kartons, Clip-Gebinde oder Kästen handeln.

Das System kann zwei oder mehr der beschriebenen Industrieroboter umfassen.

Insbesondere kann ein Industrieroboter zum Entpalettieren der Stückgüter verwendet werden.

Insbesondere kann ein Industrieroboter zum Palettieren der Stückgüter verwendet werden.

Bei dem System kann es sich um eine Behälterabfüllanlage mit den bereits beschriebenen Maschinen, insbesondere der Abfüllmaschine, handeln. Alternativ oder zusätzlich kann es sich bei dem System um eine Kommissionieranlage handeln, insbesondere bei der Behälter oder Gebinde von sortenreinen Paletten zu Mischpaletten mit unterschiedlichen Sorten an Behältern oder Gebinden verarbeitet werden.

Die oben genannte Aufgabe wird darüber hinaus durch ein Verfahren mit den Merkmalen des Anspruchs 15 gelöst. Das Verfahren sieht vor, dass die Handhabung von Stückgütern mit einem Industrieroboter durchgeführt wird, der mit einer für große Traglasten ausgebildeten, seriellen Kinematik ausgestattet ist. Die Kinematik umfasst ein Karussell, welches an einer Roboterbasis drehbar aufgenommen ist, einen ersten Antrieb, der das Karussell um eine erste geometrische Antriebsachse relativ zu der Roboterbasis dreht, eine an dem Karussell drehbar aufgenommene Schwinge, einen zweiten Antrieb, der die Schwinge um eine zweite geometrische Antriebsachse relativ zu dem Karussell dreht, einen Armausleger, der an der Schwinge drehbar aufgenommen ist, einen dritten Antrieb, der den Armausleger um eine dritte geometrische Antriebsachse relativ zu der Schwinge dreht und einen an dem Armausleger zumindest mittelbar angeordneten Endeffektorträger, welcher einen die Stückgüter handhabenden Endeffektor aufnimmt. Darüber hinaus ist die Kinematik mit einer Gewichtsausgleichseinrichtung, welche mindestens einen Zylinder mit einem hydraulisch und/ oder pneumatisch betriebenen Kolben umfasst, und mit einer Steuereinrichtung, welche die Gewichtsausgleichseinrichtung steuert, ausgestattet. Dabei kompensiert die Gewichtsausgleichseinrichtung die auf die Kinematik durch eine Traglast wirkenden Kräfte zumindest teilweise. Die Steuereinrichtung stellt die durch die Gewichtsausgleichseinrichtung kompensierte Kraft in Abhängigkeit von der Gewichtskraft der am Endeffektor angeordneten Traglast ein.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: Industrieroboter in Seitenansicht,
- Figur 2: Industrieroboter gemäß Figur 1 in einer perspektivischen Ansicht von hinten,
- Figur 3: Industrieroboter gemäß Figur 1 in perspektivischer Ansicht von der Seite,
- Figur 4: zweites Getriebe mit einem ersten Ausführungsbeispiel einer Schwingen-Halteeinrichtung in perspektivischer Ansicht,
- Figur 5: zweites Getriebe gemäß Figur 4 ohne Getriebe-Gehäuseteil,
- Figur 6: zweites Getriebe gemäß Figur 4 in einer Seitenansicht,
- Figur 7: zweites Getriebe gemäß Figur 4 in Schnittdarstellung, Schnitt entlang A-A in Figur 6,
- Figur 8: Ausschnitt Z aus Figur 7,
- Figur 9: Industrieroboter gemäß Figur 1 in einer Ansicht von hinten,
- Figur 10: zweites Ausführungsbeispiel eines Industrieroboters in einer Ansicht von hinten,
- Figur 11: drittes Ausführungsbeispiel eines Industrieroboters in einer Ansicht von hinten,
- Figur 12: zweites Ausführungsbeispiel einer Schwingen-Halteeinrichtung mit zurückgezogenem Schwingen-Blockiermittel,
- Figur 13: Schwingen-Halteeinrichtung gemäß Figur 12 vor dem Entfernen des zweiten Motors,
- Figur 14: Schwingen-Halteeinrichtung gemäß Figur 12 beim Entfernen des zweiten Motors,
- Figur 15: Schwingen-Halteeinrichtung gemäß Figur 12 in Arretierungszustand,
- Figur 16: schematische Darstellung der Stützstruktur des Industrieroboters gemäß Figuren 1 bis 3,
- Figur 17: zweites Ausführungsbeispiel einer Stützstruktur in schematischer Darstellung,
- Figur 18: drittes Ausführungsbeispiel einer Stützstruktur in schematischer Darstellung,
- Figur 19: System mit Industrierobotern gemäß Figuren 1 bis 3.

### Beschreibung der Ausführungsbeispiele

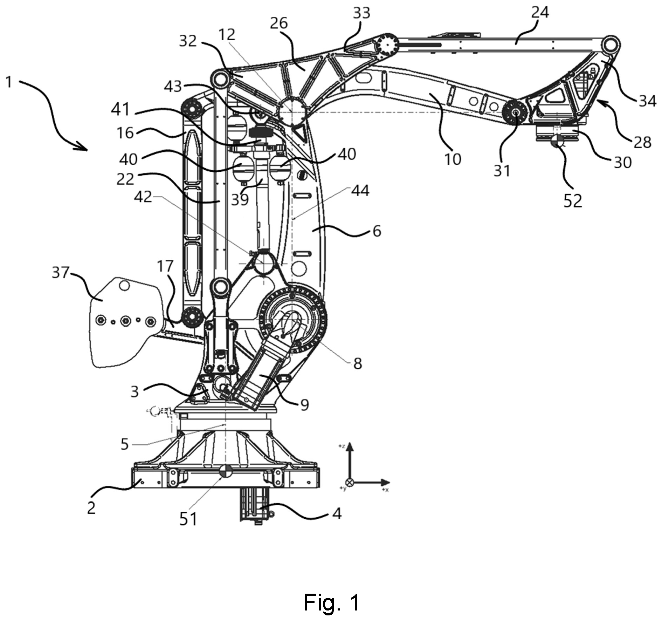

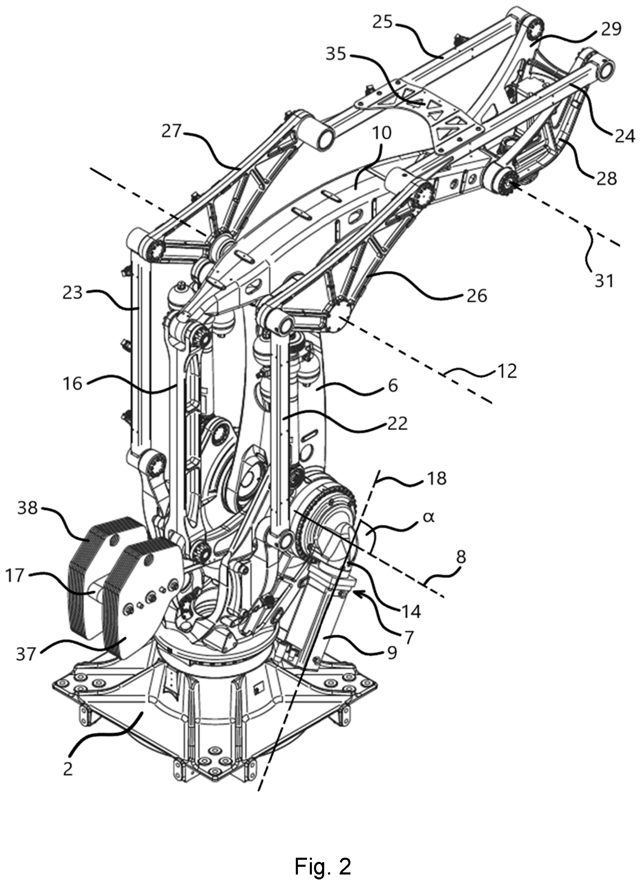

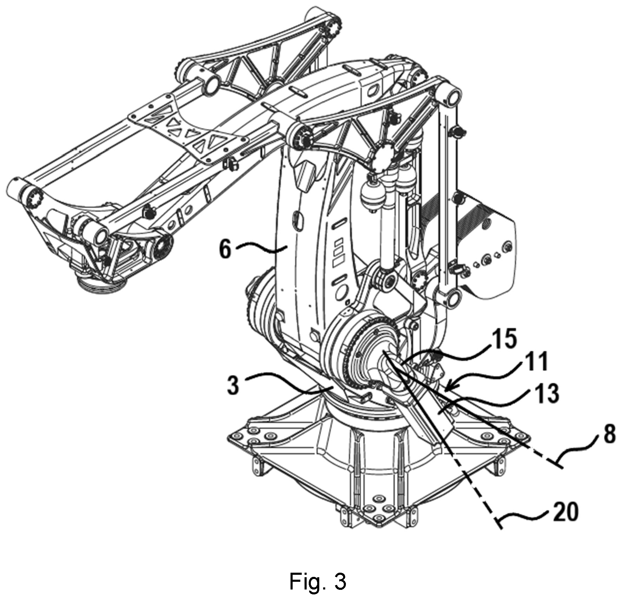

Die Figuren 1 bis 3 zeigen einen Industrieroboter 1 mit serieller Kinematik. Dieser weist eine Roboterbasis 2, ein an einer Roboterbasis drehbar aufgenommenes Karussell 3, eine an dem Karussell 3 drehbar aufgenommene Schwinge 6 und einen an der Schwinge drehbar aufgenommenen Armausleger 10 auf. Die Schwinge 6 und der Armausleger 10 haben dabei einen gekrümmten Verlauf. Ein erster Antrieb 4 übt auf das Karussell 3 relativ zu der Roboterbasis 2 ein Drehmoment um eine erste geometrische Antriebsachse 5 aus. Ein zweiter Antrieb 7 übt auf die Schwinge 6 relativ zu dem Karussell 3 ein Drehmoment um eine zweite geometrische Antriebsachse 8 aus. Der zweite Antrieb 7 umfasst einen zweiten Motor 9 und ein zweites Getriebe 14. Ein dritter Antrieb 11 übt auf den Armausleger 10 relativ zu der Schwinge 6 ein Drehmoment um eine dritte geometrische Antriebsachse 12 aus. Der dritte Antrieb 11 umfasst einen dritten Motor 13 und ein drittes Getriebe 15. Der zweite Antrieb 7 und der dritte Antrieb 11 sind an dem Karussell 3 angeordnet. Während das Drehmoment des zweiten Antriebs 7 über das als Winkelgetriebe ausgebildete zweite Getriebe 14 direkt auf ein unteres Ende der Schwinge 6 übertragen wird, ist zur Übertragung des Drehmoments des dritten Antriebs 11 auf den Armausleger 10 eine Treibstange 16 vorgesehen, die über einen Hebel 17 mit dem ebenfalls als Winkelgetriebe ausgebildeten dritten Getriebe 15 verbunden ist. Ein oberes Ende der Treibstange 16 ist beweglich mit dem Armausleger 10 verbunden. Der Industrieroboter 1 ist derart aufgestellt, dass die erste geometrische Antriebsachse 5 vertikal verläuft. Die zweite geometrische Antriebsachse 8 und die dritte geometrische Antriebsachse 12 sind parallel zueinander. Sie verlaufen horizontal. Die Schwinge 6 ist derart an dem Karussell 3 aufgenommen, dass sich die erste geometrische Antriebsachse 5 und die zweite geometrische Antriebsachse 8 nicht schneiden. Unter Vernachlässigung des daraus resultierenden Abstands verlaufen die erste geometrischen Antriebsachse 5 und die zweite geometrische Antriebsachse 8 senkrecht zueinander.

Der kinematische Ursprung 51 des Industrieroboters 1 befindet sich an der Roboterbasis 2. An dem Armausleger 10 ist mittelbar ein Endeffektorträger 30 angeordnet. An diesem befindet sich der Tool Center Point 52.

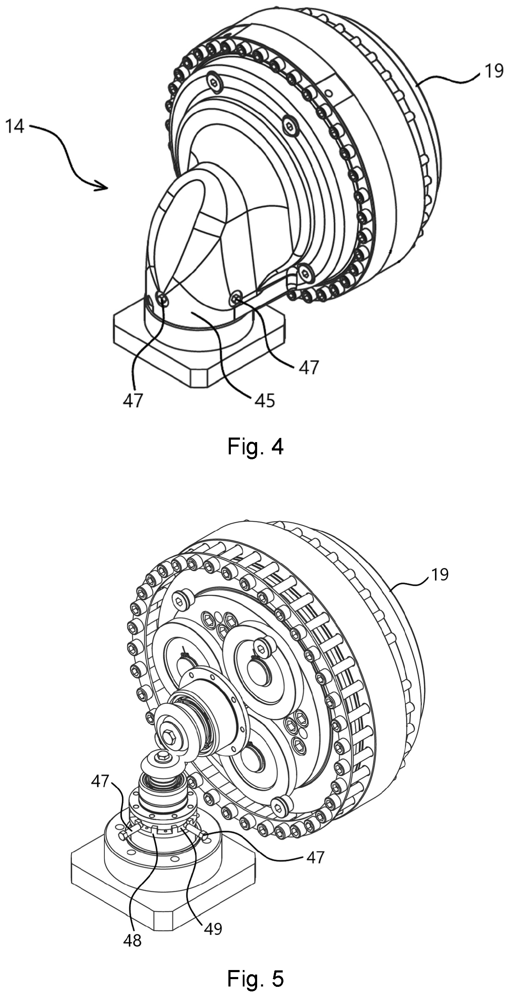

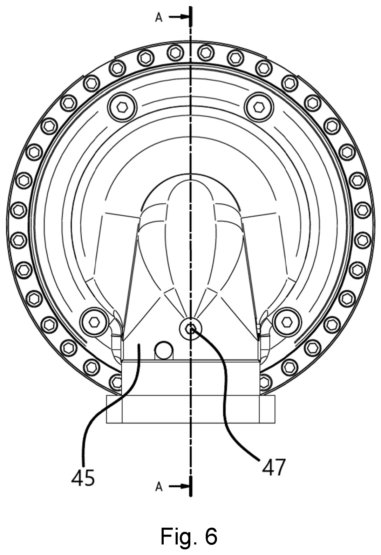

Die Figuren 4 bis 8 zeigen das zweite Getriebe 14. Der in den Figuren 4 bis 8 zur Vereinfachung nicht dargestellte zweite Motor 9 erzeugt ein Drehmoment um eine geometrische Motorwellenachse 18. Das als Winkelgetriebe ausgebildete zweite Getriebe 14 sorgt für eine Umlenkung dieses Drehmoments um einen Winkel α = 90°. Die geometrische Achse, um die die Abgangswelle des zweiten Getriebes 14 rotiert, stimmt mit der zweiten geometrischen Antriebsachse 8 überein. Die Abgangswelle des zweiten Getriebes entspricht der Schwingen-Antriebswelle 19 eines Schwingenantriebsstrangs. Mit der Schwingen-Antriebswelle 19 wird die Schwinge verbunden, welche in den Figuren 4 bis 8 nicht dargestellt ist.

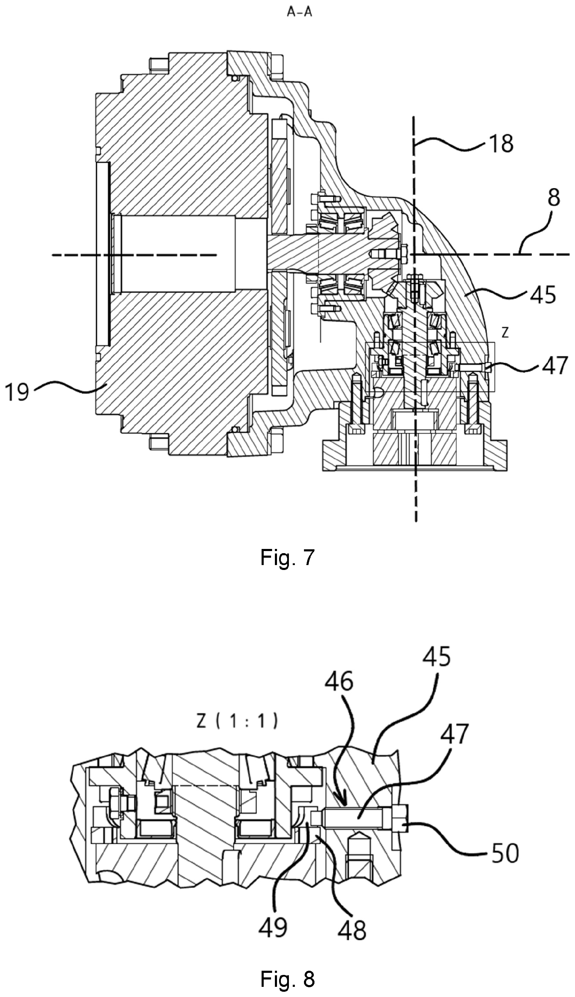

Das in den Figuren 4 bis 8 dargestellte zweite Getriebe 14 ist mit einer Schwingen-Halteeinrichtung ausgestattet. Diese umfasst das Getriebe-Gehäuseteil 45, welches mit zweiten Aufnahmen 46 ausgestattet und starr mit dem Karussell 3 verbunden ist, Schwingen-Blockiermittel 47, welche als Schrauben ausgebildet sind, und ein Schwingen-Blockierelement 48, welches Ausnehmungen 49 für die Schrauben aufweist und Teil eines Schwingen-Antriebsstrangs ist. Das Schwingen-Blockierelement 48 ist in dem Getriebe-Gehäuseteil 45 um die geometrische Motorwellenachse 18 drehbar aufgenommen. Es ist Teil des als Winkelgetriebe ausgebildeten zweiten Getriebes 14. Das Schwingen-Blockierelement 48 weist eine zylindrische Form auf. Die zweiten Aufnahmen 46 in dem Getriebe-Gehäuseteil 45 sind mit einem Innengewinde ausgestattet. Die Figuren 4 bis 8 zeigen mehrere Schwingen-Blockiermittel 47 in Form von Schrauben, die in die Aufnahmen 46 eingesetzt sind. Dabei steht ein Gewinde der Schrauben in Eingriff mit dem Innengewinde der jeweils zugehörigen Aufnahme 46. Figur 8 zeigt, dass die Schraube mit ihrem dem Schraubenkopf 50 abgewandten Ende in eine Ausnehmung 49 des Schwingen-Blockierelements 48 eingreift und dadurch das Schwingen-Blockierelement 48, welches Teil des Schwingen-Antriebsstrangs ist, mit dem Getriebe-Gehäuseteil 45, welches an dem Karussell befestigt ist, fest verbindet, so dass das Schwingen-Blockierelement 48 und damit auch die Schwingen-Antriebswelle 19 mit der daran angeordneten Schwinge relativ zu dem Karussell festgelegt und arretiert sind. Figur 5 zeigt, dass das Schwingen-Blockierelement 48 mehrere Ausnehmungen 49 für die Schwingen-Blockiermittel 47 aufweist. Figur 4 zeigt, dass das Getriebe-Gehäuseteil 45 mehrere Aufnahmen 46 aufweist. Dadurch können mehrere Schwingen-Blockiermittel 47 in Form von Schrauben zur Arretierung der Schwinge eingesetzt werden. Darüber hinaus kann die Schwinge in mehreren verschiedenen Schwingen-Haltestellungen arretiert werden. Die Schwingen-Halteeinrichtung befindet sich in den Figuren 4 bis 8 in ihrem Arretierungszustand. In diesem Arretierungszustand kann der in den Figuren 4 bis 8 nicht dargestellte zweite Motor von dem zweiten Getriebe 14 abgenommen werden, wobei die Schwinge durch die Schwingen-Halteeinrichtung in ihrer Ausrichtung gehalten wird.

Der dritte Motor 13 und das dritte Getriebe 15 sind ebenfalls seitlich an dem Karussell 3 angeordnet, wobei das dritte Getriebe 15 ein Drehmoment des dritten Motors 13 um einen Winkel α = 90° umlenkt. Eine geometrische Motorwellenachse 20 des dritten Motors schließt mit einer geometrischen Achse, um welche die Abgangswelle des dritten Getriebes 15 drehbar ist, den Winkel α ein. Die geometrische Achse, um die die Abgangswelle des dritten Getriebes 15 drehbar ist, fällt mit der zweiten geometrischen Antriebsachse 8 zusammen. Das dritte Getriebe 15 ist entsprechend zu dem zweiten Getriebe 14 ausgebildet und weist eine Armausleger-Halteeinrichtung auf, die mit der Schwingen-Halteeinrichtung gemäß den Figuren 4 bis 8 übereinstimmt.

Das als Winkelgetriebe ausgebildete zweite Getriebe 14 und das als Winkelgetriebe ausgebildete dritte Getriebe 15 sorgen dafür, dass die geometrischen Motorwellenachsen 18, 20 nicht entlang der zweiten geometrischen Antriebsachse 8 oder parallel zu dieser verlaufen und dass damit der zweite Motor 9 und der dritte Motor 13 nicht entlang der zweiten geometrischen Antriebsachse 8 radial nach außen von dem Karussell 3 abstehen. Stattdessen liegen die Motoren 9, 13 seitlich an dem Karussell 3 an. Der Industrieroboter beansprucht damit in Richtung der zweiten geometrischen Antriebsachse 8 weniger Platz. Dies sorgt bei einer Rotation des Karussells 3 um die erste geometrische Antriebsachse 5 für weniger Störung der Umgebung des Industrieroboters 1. Darüber hinaus schließt die geometrische Motorwellenachse 18 des zweiten Motors 9 des zweiten Antriebs 7 mit der ersten geometrischen Antriebsachse 5 einen Winkel β von 30° ein. Der zweite Motor 9 ist damit mit seiner Motorwellenachse 18 weder vertikal noch horizontal ausgerichtet. Die unter einem Winkel gegen die erste geometrische Antriebsachse ausgerichtete Anordnung des zweiten Motors 9 sorgt zusätzlich dafür, dass der Motor weder die Kinematik noch die Umgebung des Industrieroboters behindert. Entsprechendes gilt den dritten Motor 13 und die zugehörigen geometrische Motorwellenachse 20. Sie verläuft ebenfalls unter einem Winkel β von 30° gegen die erste geometrische Antriebsachse 5. Die geometrische Motorwellenachse 20 des dritten Motors 13 ist zu der geometrischen Motorwellenachse 18 des zweiten Motors 9 parallel.

Der Industrieroboter 1 weist eine Stützstruktur auf, welche zwei der Schwinge 6 zugeordnete Schwinge-Stützstangen 22, 23, zwei dem Armausleger 10 zugeordnete Armausleger-Stützstangen 24, 25, zwei die Schwinge-Stützstangen 22, 23 und die Armausleger-Stützstangen 24, 25 beweglich miteinander verbindende Drehmomentstützen 26, 27 und zwei die Armausleger-Stützstangen 24, 25 mit dem Endeffektorträger 30 verbindende Endeffektorstützen 28, 29 umfasst. Die Schwinge-Stützstangen 22, 23 sind mit einem ersten Ende drehbar an dem Karussell 3 und mit ihrem zweiten Ende drehbar an jeweils einer Drehmomentstütze 26, 27 aufgenommen. Die Drehmomentstützen 26, 27 sind relativ zu der Schwinge 6 um die dritte geometrische Antriebsachse 12 drehbar angeordnet. Die Endeffektorstützen 28, 29 sind um eine geometrische Endeffektorstützen-Achse 31 drehbar an dem Armausleger 10 aufgenommen. Die Endeffektorstützen-Achse 31 ist dabei parallel zu der dritten geometrischen Antriebsachse 12. Der Endeffektorträger 30 ist darüber hinaus an den zwei Endeffektorstützen 28, 29 beweglich aufgenommen. An ihm kann ein in der Zeichnung nicht dargestellter Endeffektor angeordnet werden. Die geometrischen Achsen, um die die Schwinge-Stützstangen 22, 23 und die Armausleger-Stützstangen 24, 25 drehbar an der Kinematik aufgenommen sind, sind dabei parallel zu der zweiten geometrischen Antriebsachse 8 und der dritten geometrischen Antriebsachse 12. Dabei spannen die kürzesten geometrischen Verbindungen zwischen der dritten geometrischen Antriebsachse 12, der geometrischen Endeffektorstützen-Achse 31 und den geometrischen Achsen, um die die Armausleger-Stützstangen 24, 25 an den Drehmomentstützen 26, 27 und an den Endeffektorstützen 28, 29 drehbar aufgenommen sind, ein erstes geometrisches Parallelogramm auf. Ferner spannen die geometrischen Verbindungen zwischen der zweiten geometrischen Antriebsachse 8, der dritten geometrischen Antriebsachse 12 und den geometrischen Achsen, um die die Schwinge-Stützstangen 22, 23 an dem Karussell 3 und an den Drehmomentstützen 26, 27 drehbar aufgenommen sind, ein zweites geometrisches Parallelogramm auf.

Die Schwinge-Stützstangen 22, 23, die Armausleger-Stützstangen 24, 25, die Drehmomentstützen 26, 27 und die Endeffektorstützen 28, 29 bilden zwei kinematische Ketten:
eine erste Schwinge-Stützstange 22, eine erste Drehmomentstütze 26, eine erste Armausleger-Stützstange 24 und eine erste Endeffektorstütze 28 bilden eine erste kinematische Kette zwischen dem Karussell 3 und dem Endeffektorträger 30,
eine zweite Schwinge-Stützstange 23, eine zweite Drehmomentstütze 27, eine zweite Armausleger-Stützstange 25 und eine zweite Endeffektorstütze 29 bilden eine zweite kinematische Kette zwischen dem Karussell 3 und dem Endeffektorträger 30.

Die Schwinge-Stützstangen 22, 23 die Armausleger-Stützstangen 24, 25, die Drehmomentstützen 26, 27 und die Endeffektorstützen 28, 29 sind dabei derart an dem Industrieroboter angeordnet, dass sich die Schwinge 6 und der Armausleger 10 in dem Zwischenraum befinden, der durch die erste kinematische Kette und die zweite kinematische Kette begrenzt wird.

Die Stützstruktur stützt damit die Schwinge 6 und den Armausleger 10 seitlich ab, wodurch die Eigenstabilität und die Steifheit der Kinematik erhöht werden. Die Gefahr von Schwingungen und Vibrationen wird reduziert, was für eine hohe Präzision bei der Positionierung eines an dem Endeffektorträger angeordneten Endeffektors und einer zusätzlichen Traglast führt. Trotz einer kompakten Bauweise des Industrieroboters und einer hohen Traglast weist der Industrieroboter einen großen Arbeitsbereich auf.

Jede der Drehmomentstützen 26, 27 wirkt in Bezug auf die dritte geometrische Antriebsachse 12 wie ein zweiarmiger Hebel. An einem ersten Hebelarm 32 der ersten Drehmomentstütze 26 ist das zweite Ende der ersten Schwinge-Stützstange 22 drehbar aufgenommen. An einem zweiten Hebelarm 33 der ersten Drehmomentstütze 26 ist ein erstes Ende der ersten Armausleger-Stützstange 24 drehbar ausgenommen. Entsprechendes gilt für die zweite Drehmomentstütze 27: an einem ersten Hebelarm 32 der zweiten Drehmomentstütze 27 ist das zweite Ende der zweiten Schwinge-Stützstange 23 drehbar aufgenommen, während an einem zweiten Hebelarm 33 der zweiten Drehmomentstütze 27 ein erstes Ende der zweiten Armausleger-Stützstange 25 drehbar aufgenommen ist.

Jede der Endeffektorstützen 28, 29 wirkt als einarmiger Hebel in Bezug auf die geometrische Endeffektorstützen-Achse: an einem Hebelarm 34 der ersten Endeffektorstütze 28 ist die erste Armausleger-Stützstange 24 mit einem zweiten Ende aufgenommen. Entsprechend ist an einem Hebelarm 34 der zweiten Endeffektorstütze 29 die zweite Armausleger-Stützstange 25 mit einem zweiten Ende aufgenommen.

Die erste Schwinge-Stützstange 22 und die zweite Schwinge-Stützstange 23 sind parallel zueinander. Ebenso sind die erste Armausleger-Stützstange 24 und die zweite Armausleger-Stützstange 25 parallel zueinander. Sie sind ferner durch ein Querverbinder 35 abgestützt.

Die Stützstruktur ist damit in der Lage, der Bewegung der Schwinge 6 und des Armauslegers 10 zu folgen, wobei die Bewegung durch den zweiten Antrieb 7 und den dritten Antrieb 11 ausgelöst wird. Die Stützstruktur ist dabei passiv. Sie wird nicht durch einen zusätzlichen Antrieb unterstützt. Die Stützstruktur sorgt dafür, dass der Endeffektorträger 30 stets parallel zu einer durch die Roboterbasis aufgespannten Ebene ist. Bevorzugt verläuft diese Ebene horizontal.

Der Industrieroboter 1 ist mit physischen Gewichten 36 in Scheibenform ausgestattet, welche zu einem ersten Stapel 37 und einem zweiten Stapel 38 zusammengefasst sind. Dabei sind die Stapel 37, 38 symmetrisch zur Treibstange 16 an dem Hebel 17 aufgenommen. Die Befestigung der Gewichte 36 in Scheibenform an dem Hebel 17 erfolgt mittels einer Schraubverbindung. Die Gewichte 36 stehen damit in die dem Armausleger 10 abgewandte Richtung von dem Karussell 3 ab und behindern daher die Bewegung eines an dem Endeffektorträger 30 angeordneten Endeffektors nicht. Die Stapel 37 und 38 der Gewichte 36 bilden ein Gegengewicht zu dem Armausleger 10. Sie werden bei Bedarf manuell an der Kinematik angeordnet oder von dieser entfernt, je nachdem, welche Traglast mit dem Industrieroboter 1 bewegt werden soll.

Darüber hinaus ist der Industrieroboter 1 mit einer Gewichtsausgleichseinrichtung ausgestattet, welche zwei Zylinder 39 umfasst. Die Gewichtsausgleichseinrichtung ist in den Figuren 1 bis 3 und Figur 9 erkennbar. In jedem Zylinder 39 ist ein Kolben verschiebbar aufgenommen, welcher in der Zeichnung nicht erkennbar ist. Der Kolben ist mit einer Kolbenstange 41 ausgestattet. Jeder Zylinder 39 ist über ein erstes Lager 42 drehbar mit dem Karussell 3 verbunden. Dabei ist das erste Lager 42 abseits einer geometrischen Verbindung 44 zwischen der zweiten geometrischen Antriebsachse 8 und der dritten geometrischen Antriebsachse 12 angeordnet. Dies ist in Figur 1 dargestellt. In dieser Darstellung befindet sich die Schwinge 6 in einer im wesentlichen vertikalen Ausrichtung, so dass sich die zweite geometrische Antriebsachse 8 und die dritte geometrische Antriebsachse 12 eine vertikale Ebene aufspannen. Die geometrische Verbindung 44 verläuft in dieser vertikalen Ebene und innerhalb der Schwinge. Das erste Lager 42 befindet sich auf der dem Endeffektorträger 30 abgewandten Seite dieser vertikalen Ebene. Jede Kolbenstange 41 ist über ein zweites Lager 43 zumindest mittelbar drehbar mit der Schwinge 6 verbunden. Jeder Zylinder 39 ist mit drei Druckspeichern 40 gekoppelt. Jeder Druckspeicher weist eine nicht dargestellte Membran auf, die das Volumen des Druckspeichers in ein erstes Teilvolumen und ein zweites Teilvolumen unterteilt. Das erste Teilvolumen ist mit Hydraulikflüssigkeit gefüllt und über eine nicht dargestellte Leitung mit dem Zylinder 39 verbunden. Das zweite Teilvolumen ist mit einem Gas gefüllt. Durch Erhöhung des Gasdrucks in dem zweiten Teilvolumen vergrößert sich dieses und drückt dadurch Hydraulikflüssigkeit über die Leitung in den zugehörigen Zylinder 39. Eine in der Zeichnung nicht dargestellte Steuereinrichtung steuert die Gewichtsausgleichseinrichtung in Abhängigkeit von der Gewichtskraft einer an dem Endeffektor angeordneten Traglast. Diese Traglast ist in der Zeichnung nicht dargestellt. Zur Steuerung der durch die Gewichtsausgleicheinrichtung ausgeübten Gegenkraft stellt die Steuereinrichtung ein, welche und wie viele der Druckspeicher 40 mit den Zylindern 39 derart aktiv wirkverbunden sind, dass Hydraulikflüssigkeit von dem Druckspeicher und den Druckspeichern in den Zylinder geleitet wird. Darüber hinaus stellt die Steuereinrichtung über ein nicht dargestelltes Proportionalventil ein, welches Volumen einer Hydraulikflüssigkeit zur Bewegung des Kolbens im jeweiligen Zylinder 39 zur Verfügung steht.

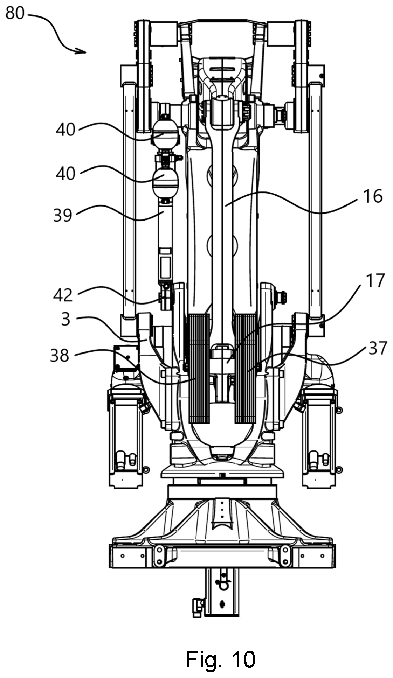

In Figur 10 ist ein zweites Ausführungsbeispiel eines Industrieroboters 80 dargestellt, der im Unterschied zu dem Industrieroboter 1 gemäß Figuren 1 bis 3 und 9 nur mit einem Zylinder 39 und Druckspeichern 40 ausgestattet ist, die diesem Zylinder 39 zugeordnet sind. Genau wie bei dem ersten Ausführungsbeispiel des Industrieroboters 1 ist der Zylinder 39 über ein erstes Lager 42 drehbar mit dem Karussell 3 verbunden. Die Verbindung über ein zweites Lager entspricht ebenfalls dem Industrieroboter 1 jedoch ist das zweite Lager in Figur 10 durch die Druckspeicher 40 verdeckt. Mit Ausnahme der Anzahl der Zylinder und der Druckspeicher stimmt der Industrieroboter 80 mit dem Industrieroboter 1 überein. Zur Funktionsweise wird daher auf die obige Beschreibung verwiesen. Der Industrieroboter 80 weist genau wie der Industrieroboter 1 zwei Stapel 37 und 38 mit physischen Gewichten in Scheibenform auf, die symmetrisch zur Treibstange 16 an dem Hebel 17 aufgenommen sind und ein Gegengewicht zu dem Armausleger des Industrieroboters 80 bilden.

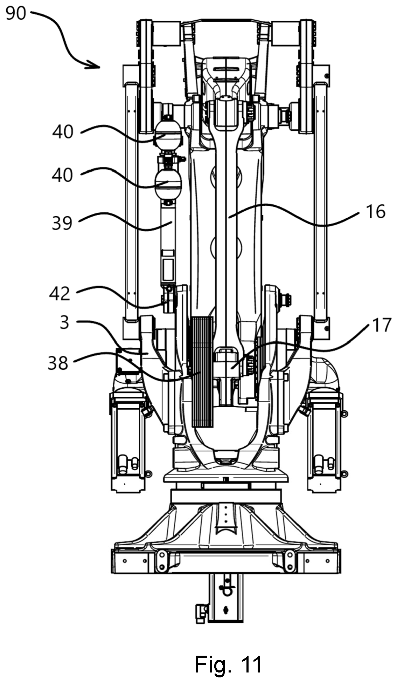

In Figur 11 ist ein drittes Ausführungsbeispiel eines Industrieroboters 90 dargestellt, der im Unterschied zu dem Industrieroboter 1 gemäß Figuren 1 bis 3 und 9 nur mit einem Zylinder 39, mit diesem Zylinder 39 zugeordneten Druckspeichern 40 und nur mit einem Stapel 38 an physischen Gewichten in Scheibenform ausgestattet ist. Der Stapel 38 ist an dem Hebel 17 aufgenommen, der an der Treibstange 16 angeordnet ist. Hinsichtlich aller übrigen Merkmale stimmt der Industrieroboter 90 mit dem Industrieroboter 1 überein.

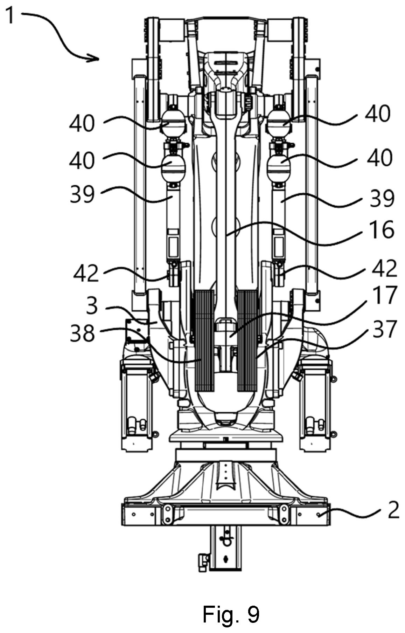

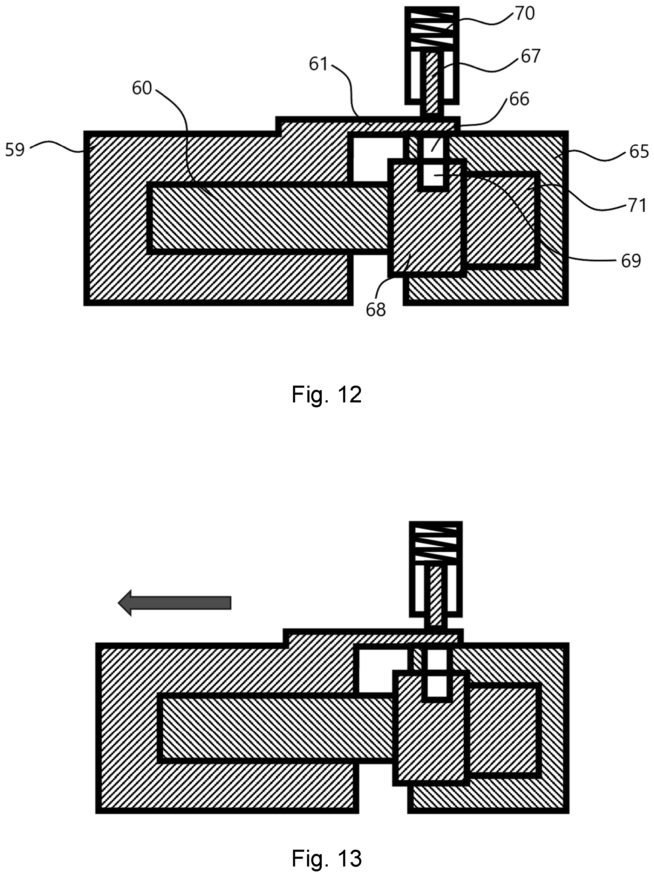

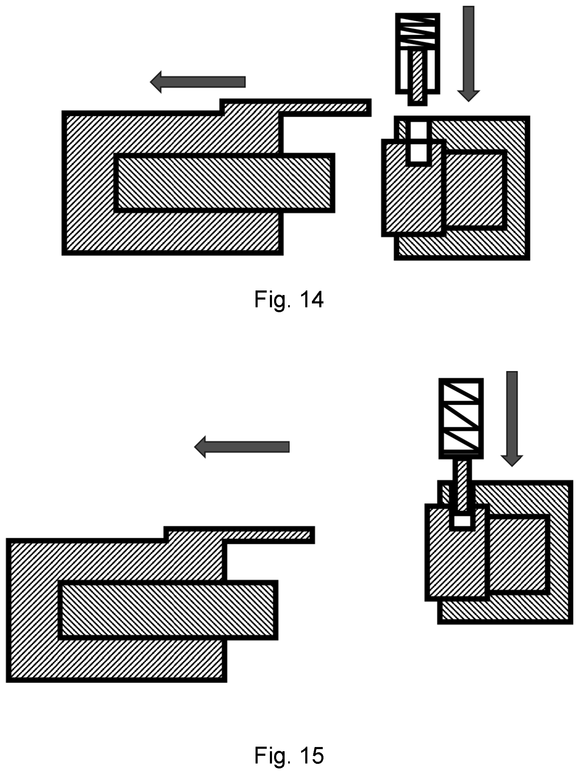

In den Figuren 12 bis 15 ist ein zweites Ausführungsbeispiel einer Schwingen-Halteeinrichtung dargestellt. Diese Schwingen-Halteeinrichtung ist eine alternative Ausführungsform der in den Figuren 4 bis 8 dargestellten Schwingen-Halteeinrichtung. Sie sorgt dafür, dass die Schwinge in einer Schwingen-Halterstellung gehalten und arretiert wird, wenn der Industrieroboter gewartet, repariert oder transportiert werden soll. Die Schwingen-Halteeinrichtung gemäß Figuren 9 bis 12 umfasst ein Getriebe-Gehäuseteil 65, an welchem eine Schwingen-Antriebswelle 71 des zweiten Getriebes drehbar aufgenommen ist, eine zweite Aufnahme 66 an dem Getriebe-Gehäuseteil 65, ein Schwingen-Blockiermittel 67 in Form eines Bolzens, ein Schwingen-Blockierelement 68, welches als Nabe ausgebildet und mit einer Ausnehmung 69 ausgestattet ist, eine Feder 70 sowie ein Halteteil 61, welches an einem zweiten Motor 59 befestigt ist. Das Getriebe-Gehäuseteil 65 ist an dem Karussell befestigt, welches in den Figuren 9 bis 12 nicht dargestellt ist. Das Schwingen-Blockiermittel 67 in Form eines Bolzens und die Feder 70 sind entweder an dem Getriebe-Gehäuseteil 65 oder an dem Karussell aufgenommen. Die Schwingen-Antriebswelle 71 ist Teil des Schwingenantriebsstrangs, welcher das Drehmoment des zweiten Motors 59 auf die in Figur 12 bis 15 nicht dargestellte Schwinge überträgt. Das als Nabe ausgebildete Schwingen-Blockierelement 68 ist drehfest und nicht lösbar mit der Schwingen-Antriebswelle 71 verbunden. In Figur 12 ist der zweite Motor 59 an dem Getriebegehäuseteil 65 angeordnet. Eine Motorwelle 60 des zweiten Motors 59 ist drehfest mit der Nabe verbunden und überträgt ihr Drehmoment auf diese. Der als Schwingen-Blockiermittel 67 dienende Bolzen ist zurückgezogen und befindet sich außerhalb der zweiten Aufnahme 66 des Getriebe-Gehäuseteils 65 sowie außerhalb der Ausnehmung 69 des als Nabe ausgebildeten Schwingen-Blockierelements 68. In dieser Stellung wird das Schwingen-Blockiermittel 67 durch das Halteteil 61 gehalten. Das Halteteil 61 drückt dabei das Schwingen-Blockiermittel 67 gegen die Feder 70, die dadurch gestaucht wird. Dadurch ist das Schwingen-Blockiermittel 67 unter Vorspannung aufgenommen. Die Figuren 13 und 14 zeigen, dass der zweite Motor 59 mit der Motorwelle 60 und dem Halteteil 61 von dem Getriebe-Gehäuseteil 65 entfernt wird. Dabei gibt das Halteteil 61 das Schwingen-Blockiermittel 67 frei. Die gestauchte Feder 70 entspannt sich und drückt dadurch das Schwingen-Blockiermittel 67 in die zweite Aufnahme 66 des Getriebe-Gehäuseteils 65 und in die Ausnehmung 69 des Schwingen-Blockierelements 68. Die mit dem Schwingen-Blockierelement 68 drehfest verbundene Schwingen-Antriebswelle 71 wird dadurch in ihrer Position gehalten und kann sich daher nicht drehen. Entsprechend verbleibt die in den Figuren 12 bis 15 nicht dargestellte Schwinge, welche an die Schwingen-Antriebswelle 71 gekoppelt ist, in ihrer Schwingen-Haltestellung. Die Schwingen-Halteeinrichtung befindet sich nun in ihrem Arretierungszustand. Dies ist Figur 15 dargestellt. Die Armausleger-Haltereinrichtung kann entsprechend ausgebildet sein.

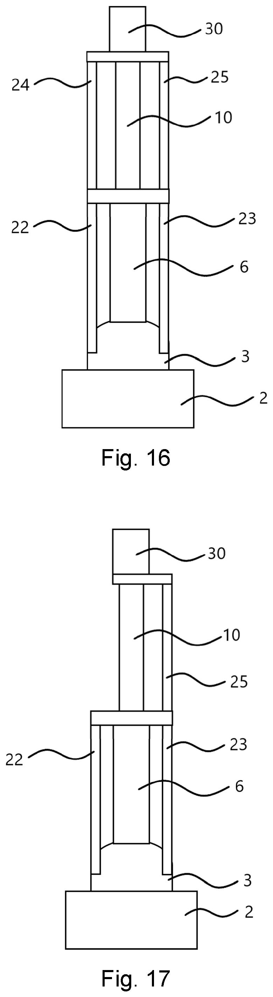

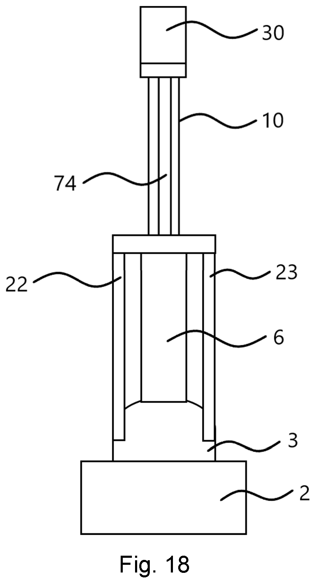

In den Figuren 16, 17 und 18 sind verschiedene Ausführungsbeispiele einer Stützstruktur der Kinematik schematisch dargestellt. Der Industrieroboter umfasst eine Roboterbasis 2, ein Karussell 3, eine Schwinge 6, einen Armausleger 10 und einen Endeffektorträger 30. Figur 16 zeigt vereinfacht das Ausführungsbeispiel gemäß den Figuren 1 bis 3 und Figur 9: Die Stützstruktur weist zwei Schwinge-Stützstangen 22, 23 und zwei Armausleger-Stützstangen 24, 25 derart auf, dass sich die Schwinge 6 und der Armausleger 10 in einem Zwischenraum befinden, der durch die Schwinge-Stützstangen 22, 23 und durch die Armausleger-Stützstangen 24, 25 aufgespannt wird. Zur Vereinfachung sind die Drehmomentstützen und die Endeffektorstützen nicht dargestellt. Das in Figur 17 dargestellte zweite Ausführungsbeispiel unterscheidet sich von dem ersten Ausführungsbeispiel dadurch, dass der Armausleger 10 nur mit einer Armausleger-Stützstange 25 ausgestattet ist. Diese ist seitlich neben dem Armausleger angeordnet. Der Armausleger wird damit nur auf einer Seite von der Armausleger-Stützstange 25 unterstützt. Bei dem dritten Ausführungsbeispiel gemäß Figur 18 ist ebenfalls nur eine einzige Armausleger-Stützstange 74 vorgesehen. Im Unterschied zu dem in Figur 17 dargestellten Ausführungsbeispiel ist die Armausleger-Stützstange 74 jedoch nicht seitlich neben dem Armausleger 10 angeordnet, sondern zentral oberhalb des Armauslegers 10.

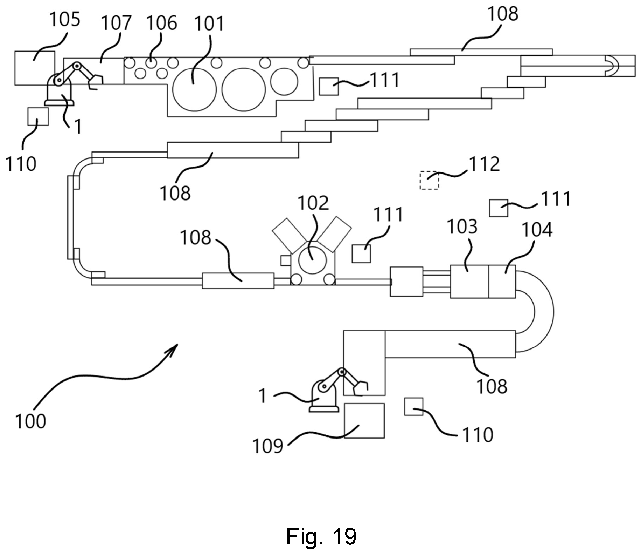

Figur 19 zeigt ein Ausführungsbeispiel eines Systems 100, welches mit zwei Industrierobotern 1 gemäß den Figuren 1 bis 9 ausgestattet ist. Diese dienen als Entpalettierroboter und als Palettierroboter. Sie sind mit nicht näher dargestellten Greifern ausgestattet, welche Behälter oder Gebinde aufnehmen und halten. Hierzu zählen Klemmgreifer zum seitlichen Einklemmen von Behältern oder Gebinden, Hakengreifer zum Aufnehmen von Getränkekisten, Beladeplatten, auf die Behälter oder Gebinde geschoben werden können, und Vakuumsaugplatten zum Ansaugen von Dosen. Das System 100 ist als Behälter-Abfüllanlage ausgebildet. Hierzu umfasst das System 100 neben den Industrierobotern 1 mehrere Behälterbehandlungsmaschinen: eine Abfüllmaschine 101, eine Etikettiermaschine 102, einen Packer 103 und einen Schrumpftunnel 104. An einem Anlieferplatz 105 werden Paletten mit leeren Behältern 106 in Form von Flaschen oder Dosen abgesetzt. Der erste Industrieroboter 1 dient zum Entpalettieren. Die Behälter 106 werden anschließend vereinzelt und mit einem Transportband 107 der Abfüllmaschine 101 zuführt. Die befüllten und verschlossenen Behälter werden dann über weitere Transportbänder 108 zu der Etikettiermaschine 102, dem Packer 103 und dem Schrumpftunnel 104 transportiert. Die zu Gebinden zusammengestellten Behälter werden schließlich von dem zweiten Industrieroboter 1 an einem Stapelplatz 109 palettiert. Die Industrieroboter 1 sind mit Steuerungen 110 ausgestattet, die mit weiteren Steuerungen 111 der Behandlungsmaschinen und gegebenenfalls mit einer übergeordneten Anlagen-Steuerung 112 für das gesamte System gekoppelt sind.

Sämtliche Merkmale der Erfindung können sowohl einzeln als auch in beliebiger Kombination miteinander erfindungswesentlich sein.

### Bezugszahlen

- 1: Industrieroboter
- 2: Roboterbasis
- 3: Karussell
- 4: Erster Antrieb
- 5: Erste geometrische Antriebsachse
- 6: Schwinge
- 7: Zweiter Antrieb
- 8: Zweite geometrische Antriebsachse
- 9: Zweiter Motor
- 10: Armausleger
- 11: Dritter Antrieb
- 12: Dritte geometrische Antriebsachse
- 13: Dritter Motor
- 14: Zweites Getriebe
- 15: Drittes Getriebe
- 16: Treibstange
- 17: Hebel
- 18: Geometrische Motorwellenachse des zweiten Motors
- 19: Schwingen-Antriebswelle
- 20: Geometrische Motorwellenachse des dritten Motors
- 22: Schwinge-Stützstange
- 23: Schwinge-Stützstange
- 24: Armausleger-Stützstange
- 25: Armausleger-Stützstange
- 26: Drehmomentstütze
- 27: Drehmomentstütze
- 28: Endeffektorstütze
- 29: Endeffektorstütze
- 30: Endeffektorträger
- 31: Geometrische Endeffektorstützen-Achse
- 32: Erster Hebelarm der Drehmomentstütze
- 33: Zweiter Hebelarm der Drehmomentstütze
- 34: Hebelarm der Endeffektorstütze
- 35: Querverbinder
- 36: Gewicht in Scheibenform
- 37: Erster Stapel
- 38: Zweiter Stapel
- 39: Zylinder
- 40: Druckspeicher
- 41: Kolbenstange
- 42: Erstes Lager
- 43: Zweites Lager
- 44: Geometrische Verbindung
- 45: Getriebe-Gehäuseteil
- 46: Zweite Aufnahme
- 47: Schwingen-Blockiermittel
- 48: Schwingen-Blockierelement
- 49: Ausnehmung
- 50: Schraubenkopf
- 51: Kinematischer Ursprung
- 52: Tool Center Point
- 59: zweiter Motor
- 60: Motorwelle
- 61: Halteteil
- 65: Getriebe-Gehäuseteil
- 66: zweite Aufnahme
- 67: Schwingen-Blockiermittel
- 68: Schwingen-Blockierelement
- 69: Ausnehmung
- 70: Feder
- 71: Schwingen-Antriebswelle
- 74: Armausleger-Stützstange
- 80: Industrieroboter
- 90: Industrieroboter
- 100: System
- 101: Abfüllmaschine
- 102: Ettiketiermaschine
- 103: Packer
- 104: Schrumpftunnel
- 105: Anlieferplatz
- 106: Behälter
- 107: Transportband
- 108: Transportband
- 109: Stapelplatz
- 110: Steuerung des Industrieroboters
- 111: Steuerung der Behandlungsmaschine
- 112: übergeordnete Anlagen-Steuerung

## Patentansprüche

1. Industrieroboter (1, 80, 90) zur Handhabung von Stückgütern
mit einer seriellen Kinematik, welche für eine große Traglast der Stückgüter ausgebildet ist, mit einem an einer Roboterbasis (2) drehbar aufgenommenen Karussell (3),
mit einem ersten Antrieb (4), der das Karussell (3) um eine erste geometrische Antriebsachse (5) relativ zu der Roboterbasis (2) dreht,
mit einer an dem Karussell (3) drehbar aufgenommenen Schwinge (6),
mit einem zweiten Antrieb (7), der die Schwinge (6) um eine zweite geometrische Antriebsachse (8) relativ zu dem Karussell (3) dreht,
mit einem an der Schwinge (6) drehbar aufgenommenen Armausleger (10),
mit einem dritten Antrieb (11), der den Armausleger (10) um eine dritte geometrische Achse (12) relativ zu der Schwinge (6) dreht,
mit einem an dem Armausleger (10) beweglich angeordneten Endeffektorträger (30), welcher einen die Stückgüter handhabenden Endeffektor aufnimmt,
mit einer Gewichtsausgleichseinrichtung, welche die auf die Kinematik durch eine Traglast wirkenden Kräfte zumindest teilweise kompensiert, wobei die Gewichtsausgleichseinrichtung mindestens einen Zylinder (39) mit einem hydraulisch und/ oder pneumatisch betriebenen Kolben umfasst,
mit einer Steuereinrichtung, welche die Gewichtsausgleichseinrichtung steuert, in dem sie die durch die Gewichtsausgleichseinrichtung kompensierte Kraft in Abhängigkeit von der Gewichtskraft der am Endeffektor angeordneten Traglast einstellt.

2. Industrieroboter nach Anspruch 1, **dadurch gekennzeichnet, dass** die Kraft stufenlos einstellbar ist.

3. Industrieroboter nach Anspruch 1 oder 2, **dadurch gekennzeichnet, dass** die Gewichtsausgleichseinrichtung der Schwinge (6) und der zweiten geometrischen Antriebsachse (8) zugeordnet ist.

4. Industriebroboter nach einem der vorhergehenden Ansprüche, **dadurch gekennzeichnet, dass** die Gewichtsausgleichseinrichtung an dem Karussell (3) beweglich aufgenommen und mit der Schwinge (6( verbunden ist; und/oder
**dadurch gekennzeichnet, dass** die Gewichtsausgleichseinrichtung dem Armausleger (10) und der dritten geometrischen Antriebsachse (12) zugeordnet ist; und/oder
**dadurch gekennzeichnet, dass** die Gewichtsausgleichseinrichtung an dem Karussell (3) beweglich aufgenommen und mit dem Armausleger (10) zumindest mittelbar verbunden ist.

5. Industrieroboter nach einem der vorhergehenden Ansprüche, **dadurch gekennzeichnet, dass** der dritte Antrieb (11), welcher den Armausleger (10) um die dritte geometrische Antriebsachse (12) relativ zu der Schwinge (6) rotiert, an dem Karussell (3) angeordnet ist, dass die Kinematik mit einer Treibstange (16) ausgestattet ist, welche das Drehmoment des dritten Antriebs (11) auf den Armausleger (10) überträgt, dass die Treibstange (16) mit einem Hebel (17) verbunden ist und dass an dem Hebel (17) ein Gegengewicht (36) angeordnet ist.

6. Industrieroboter nach Anspruch 5, **dadurch gekennzeichnet, dass** der Hebel (17) an der Treibstange (16) in die dem Armausleger (10) entgegen gesetzte Richtung ausgerichtet ist.

7. Industrieroboter nach Anspruch 5 oder 6, **dadurch gekennzeichnet, dass** das Gegengewicht aus mehreren physischen Gewichten (36) in Scheibenform zusammengesetzt ist.

8. Industrieroboter nach Anspruch 7, **dadurch gekennzeichnet, dass** das Gegengewicht zwei Stapel (37, 38) mit scheibenförmigen Gewichten (36) aufweist, und dass die zwei Stapel (37, 38) symmetrisch zur Treibstange (16) an dem Hebel (17) aufgenommen sind.

9. Industrieroboter nach einem der vorhergehenden Ansprüche, **dadurch gekennzeichnet, dass** die Gewichtsausgleichseinrichtung mindestens einen Druckspeicher (40) aufweist, der mit dem Zylinder (39) in Wirkverbindung steht.

10. Industrieroboter nach Anspruch 9, **dadurch gekennzeichnet, dass** die Gewichtsausgleichseinrichtung mehrere Druckspeicher (40) aufweist, und dass die Steuereinrichtung die Anzahl der mit dem Zylinder (39) aktiv wirkverbundenen Druckspeicher (40) und die Anzahl der mit dem Zylinder (39) passiv wirkverbundenen Druckspeicher (40) regelt.

11. Industrieroboter nach einem der vorhergehenden Ansprüche, **dadurch gekennzeichnet, dass** die Gewichtsausgleichseinrichtung mit mindestens einem Proportionalventil ausgestattet ist, über welches die Steuereinrichtung das Volumen einer Hydraulikflüssigkeit für die Betätigung des Kolbens steuert.

12. Industrieroboter nach einem der vorhergehenden Ansprüche, **dadurch gekennzeichnet, dass** der Zylinder (39) über ein erstes Lager (42) drehbar mit dem Karussell (3) verbunden ist, wobei optional das erste Lager (42) abseits der kürzesten geometrischen Verbindung (44) zwischen der zweiten geometrischen Antriebsachse (8) und der dritten geometrischen Antriebsachse (12) angeordnet ist.

13. Industrieroboter nach dem der vorhergehenden Ansprüche, **dadurch gekennzeichnet, dass** der Kolben mit einer Kolbenstange (41) ausgestattet ist, die an ihrem dem Kolben abgewandten Ende über ein zweites Lager (43) zumindest mittelbar drehbar mit der Schwinge (6) verbunden ist.

14. System zur Handhabung von Stückgütern, **dadurch gekennzeichnet, dass** es mit mindestens einem Industrieroboter (1, 80, 90) nach einem der vorhergehenden Ansprüche ausgestattet ist.

15. Verfahren zur Handhabung von Stückgütern mit mindestens einem Industrieroboter (1, 80, 90) mit einer seriellen Kinematik, welche für eine große Traglast der Stückgüter ausgebildet ist, mit einem an einer Roboterbasis (2) drehbar aufgenommenen Karussell (3), mit einem ersten Antrieb (4), der das Karussell (3) um eine erste geometrische Antriebsachse (5) relativ zu der Roboterbasis (2) dreht, mit einer an dem Karussell (3) drehbar aufgenommenen Schwinge (6), mit einem zweiten Antrieb (7), der die Schwinge (6) um eine zweite geometrische Antriebsachse (8) relativ zu dem Karussell (3) dreht, mit einem an der Schwinge (6) drehbar aufgenommenen Armausleger (10), mit einem dritten Antrieb (11), der den Armausleger (10) um eine dritte geometrische Achse (12) relativ zu der Schwinge (6) dreht, mit einem an dem Armausleger (10) beweglich angeordneten Endeffektorträger (30), welcher einen die Stückgüter handhabenden Endeffektor aufnimmt, mit einer Gewichtsausgleichseinrichtung, welche mindestens einen Zylinder (39) mit einem hydraulisch und/ oder pneumatisch betriebenen Kolben umfasst, mit einer Steuereinrichtung, welche die Gewichtsausgleichseinrichtung steuert,
**dadurch gekennzeichnet,**
**dass** die Gewichtsausgleichseinrichtung die auf die Kinematik durch eine Traglast wirkenden Kräfte zumindest teilweise kompensiert, und
**dass** die Steuereinrichtung die durch die Gewichtsausgleichseinrichtung kompensierte Kraft in Abhängigkeit von der Gewichtskraft der am Endeffektor angeordneten Traglast einstellt.
